# EUROPEAN PATENT APPLICATION

(11) **EP 1 854 670 A2**
(43) Date of publication of application: **14.11.2007**
(21) Application number: 06255723.6
(22) Date of filing: 07.11.2006
(51) Int. Cl.: B60R 1/12

(54) **External rear view mirror assembly for vehicles**

(30) Priority: 10.05.2006 DK 200600655; 19.09.2006 EP 06254849
(71) Applicant: Ashtree Glass Limited, Brownroyd Street Bradford BD8 9AF (GB)
(72) Inventor: Sørensen, Ben Møller, 2850 Naerum (DK)
(74) Representative: Stuttard, Garry Philip

(57) **Abstract**

An external rear view mirror assembly (10) for a vehicle driven by a driver comprising an elongate mirror housing (14) mountable from a mounting point substantially vertically along its elongate axis on the passenger side surface of the vehicle and a rear view mirror (12) mounted in the elongate mirror housing such that a passenger side exterior of the vehicle includes a first region visible to the driver in the mirror and a second region non-visible to the driver in the mirror. A video camera (16) is mounted in or near to a lower end of the elongate mirror housing in such a manner as to provide the driver with a substantially conical field of view of at least a part of the second region. This field of view is asymmetrically disposed relative to the elongate axis of the elongate mirror housing.

## Description

The present invention relates to an external rear view mirror assembly (*eg* a passenger side or front external rear view mirror assembly), a vehicle comprising the external rear view mirror assembly and a system comprising the external rear view mirror assembly.

Commercial vehicles including buses, articulated lorries, trucks and vans have a passenger side, external rear view mirror which provides the driver with an incomplete view of the passenger side exterior region of the vehicle. The passenger side of a vehicle is the side opposite the driver side. The passenger side exterior region which is out of view is referred to commonly as the blind spot. The extent of the blind spot is determined partly by the elevated position of the driver and can be the cause of an accident when the vehicle makes a passenger side turn where other road users such as cyclists or pedestrians can be out of view. This is particularly troublesome for long vehicles where the rear wheels may cut into the arc created by the front wheels of the vehicle and cut the corner of the turn. The extent of the blind spot is heightened by the legal requirement for external rear view mirrors mounted on the passenger side of commercial vehicles to be less than a predetermined size.

It is known in prior art relating to cars to provide external rear view mirrors with cameras (see for example EP-A-1316476). However these are inadequate to address the deficiencies of external rear view mirrors on other vehicles.

Thus viewed from one aspect the present invention provides an external rear view mirror assembly for a vehicle driven by a driver comprising:
an elongate mirror housing mountable from a mounting point substantially vertically along its elongate axis on a passenger side or front surface of the vehicle;
a rear view mirror mounted in the elongate mirror housing such that a passenger side or front exterior of the vehicle includes a first region visible to the driver in the mirror and a second region non-visible to the driver in the mirror; and
a video camera mounted in or near to a lower end of the elongate mirror housing in such a manner as to provide the driver with a substantially conical field of view of at least a part of the second region, wherein the field of view is asymmetrically disposed relative to the elongate axis of the elongate mirror housing.

The present invention has the advantage that a significant proportion of the second region of the passenger side or front exterior of the vehicle is visible to the driver. In the case of the passenger side exterior, the positioning of the camera enables a driver to execute a passenger side turn whilst being aware of any road users in the blind spot. This improves road safety. In the case of front exterior, the positioning of the camera enables a driver to see beneath the windscreen. This is particularly important for viewing schoolchildren boarding school buses.

The video camera may be mounted directly or indirectly in the elongate mirror housing or near to the elongate mirror housing. For example, the video camera may be indirectly mounted via a linear or non-linear (e.g. bent) tube.

The rear view mirror may be plane or convex. The rear view mirror may be tiltable (*eg* mounted on a floating plate) or the elongate mirror housing may be tiltable (*eg* tiltable electronically).

The external rear view mirror assembly may further comprise a secondary mirror. The secondary mirror may be convex. The secondary mirror may be mounted in a lower portion of the elongate mirror housing. The secondary mirror may extend the at least a part of the second region visible to the driver.

The video camera may comprise a threaded camera body threadedly engageable with a threaded fitting body fitted in the lower end of the elongate mirror housing. The camera body may be passed through the aperture in the lower end and the fitting body may be screwed on top to secure the camera. The camera's position may be adjusted by the use of washers or grommets packed between the fitting body and the video camera.

The camera may be operable in visible light (*eg* in the wavelength range 400-700 nm). The camera may be operable in infra red light (such as in the reflective infra red spectrum (*eg* 700 nm to approximately 1200 nm) or in the thermal infra red spectrum (*eg 3* to 5.5 micro metre and 8 to 14 micro metre)) to permit night use.

The camera lens may be a wide angle lens. The camera lens may have a substantially conical field of view with a cone angle of at least 50° (*eg* between 60° and 120°), preferably 60° or more, particularly preferably 75° or more. Preferred is a camera lens with a cone angle of 90° or 120°.

Preferably the field of view is asymmetrically disposed relative to the elongate axis of the elongate mirror housing and extends to the passenger side, to the driver side, to the rear and to the front of the elongate mirror housing.

Preferably the field of view is asymmetrically disposed relative to the elongate axis of the elongate mirror housing and extends solely beneath the elongate mirror housing.

Preferably in a first preferred embodiment in which the rear view mirror is mounted in the elongate mirror housing such that a passenger side of the vehicle includes a first region visible to the driver in the mirror and a second region non-visible to the driver, the axis of the field of view is offset to the passenger side from the driver side relative to the elongate axis of the elongate mirror housing.

Preferably in a first preferred embodiment in which the rear view mirror is mounted in the elongate mirror housing such that a passenger side of the vehicle includes a first region visible to the driver in the mirror and a second region non-visible to the driver, the axis of the field of view is offset to the vehicle rear from the vehicle front relative to the elongate axis of the elongate mirror housing.

Preferably in a second preferred embodiment in which the rear view mirror is mounted in the elongate mirror housing such that a front of the vehicle includes a first region visible to the driver in the mirror and a second region non-visible to the driver, the axis of the field of view is offset to the driver side from the passenger side relative to the elongate axis of the elongate mirror housing.

Preferably in a second preferred embodiment in which the rear view mirror is mounted in the elongate mirror housing such that a front of the vehicle includes a first region visible to the driver in the mirror and a second region non-visible to the driver, the axis of the field of view is offset to the vehicle front from the vehicle rear relative to the elongate axis of the elongate mirror housing.

The field of view at ground level may be substantially rectangular. The field of view at ground level may be a substantially regular rectangle or a rectangle with a curved corner. The area of the field of view at ground level may be at least 5.5m².

Preferably the elongate mirror housing is compartmentalised.

In a preferred embodiment, the elongate mirror housing comprises:
a mirror receiving compartment with an open front face at or near to which is mounted the mirror; and
a cover compartment mounted to the rear of the mirror receiving component.

Particularly preferably the cover compartment has an open front bound by first and second opposed side walls, a upper wall and a lower wall, wherein the video camera is mounted in the lower wall. The video camera may be mounted substantially centrally in the lower wall. Preferably the video camera is mounted in the lower wall offset from the centre.

Preferably the lower wall and rear wall are divergent. Preferably the lower wall has a convex (*eg* a shallow convex) configuration.

The elongate mirror housing may be mounted to a mounting point on a vehicle in a number of ways. The elongate mirror housing may be mounted from the upper end of the housing or from the lower end of the housing or from the upper and lower ends together.

Preferably the elongate mirror housing is selectively mountable at a plurality of mounting points on or in its upper end substantially vertically along its elongate axis on the passenger side or front surface of a vehicle. Particularly preferably the mounting points are cut-away portions (*eg* substantially U-shaped cut away portions) in the upper end (preferably in the upper end of the cover compartment).

Preferably the elongate mirror housing is selectively mountable at a plurality of mounting points on or in its lower end substantially vertically along its elongate axis on the passenger side or front surface of a vehicle.

Preferably the elongate mirror housing is selectively mountable at a plurality of mounting points on or in its lower end and/or on or in its upper end substantially vertically along its elongate axis on the passenger side or front surface of a vehicle.

Viewed from a further aspect the present invention provides a vehicle comprising:
a vehicle body; and
an external rear view mirror assembly as defined hereinbefore, wherein the elongate mirror housing is mounted on a passenger side, driver side or a front surface of the vehicle body in such a manner as to provide the driver with a substantially conical field of view which extends to the passenger side, to the driver side, to the rear and to the front of the elongate mirror housing.

Preferably the elongate mirror housing is mounted on a passenger side of the vehicle body.

In one embodiment, a first elongate mirror housing may be mounted on the passenger side and a second elongate mirror housing may be mounted on the driver side.

The elongate mirror housing may be mounted on a passenger side surface of the vehicle body by a connecting arm. Typically the connecting arm is received in an aperture in the upper end of the elongate mirror housing. Preferably the upper end of the elongate mirror housing comprises more than one aperture. This has the advantage that the camera may be mounted selectively in multiple positions to suit the needs of the vehicle without impacting adversely on the field of view of the camera. The connecting arm may terminate at a point within the elongate mirror housing. The connecting arm may be hollow to receive wiring from the video camera and carry it to the vehicle.

The vehicle is preferably not a car. The vehicle may be an HGV, a truck, a van, a bus or a lorry.

Viewed from a yet further aspect the present invention provides a system comprising:
an external rear view mirror assembly as defined hereinbefore;
a display monitor positioned visibly to a driver; and
a passenger side turning signal circuit operatively connected to the monitor, wherein in use the activation of the passenger side turning signal circuit causes a camera image signal from the video camera to display on the display monitor.

The elongate mirror housing may be made of a plastic material which complies with the relevant European safety regulations. The elongate mirror housing may further comprise a mounting plate. The mounting plate may be adapted to receive a mirror assembly comprising a mirror and a motor for moving the mirror.

Typically the activation of the passenger side turning signal circuit causes the camera image signal from the video camera override any input signal to the monitor so that the camera image is displayed on the display monitor. Many commercial vehicles are fitted with a conventional display monitor. The display monitor may display the input from a number of cameras. For example, a camera may be positioned inside the vehicle for example, on a bus to view the passengers. A camera may also be fitted to the rear of the vehicle to view the space behind the rear of the vehicle and aid the driver when reversing.

The video camera may be capable of activation manually to display on the display monitor.

The present invention will now be described in a non-limitative sense with reference to the accompanying figures in which:
Figure 1 is a cross sectional view of a first embodiment of the invention;
Figures 2 and 3 are schematic diagrams of the first embodiment of the invention fitted to a vehicle in use;
Figure 3 is an alternative view of the first embodiment of figure 1 in use;
Figure 4 is a block circuit diagram of a second embodiment of the invention;
Figure 5 is a side view of the first embodiment of the invention shown in figure 1;
Figure 6 is a field of view at ground level for the first embodiment;
Figure 7 is a perspective view of a second embodiment of the invention; and
Figure 8 is a field of view at ground level for the second embodiment;

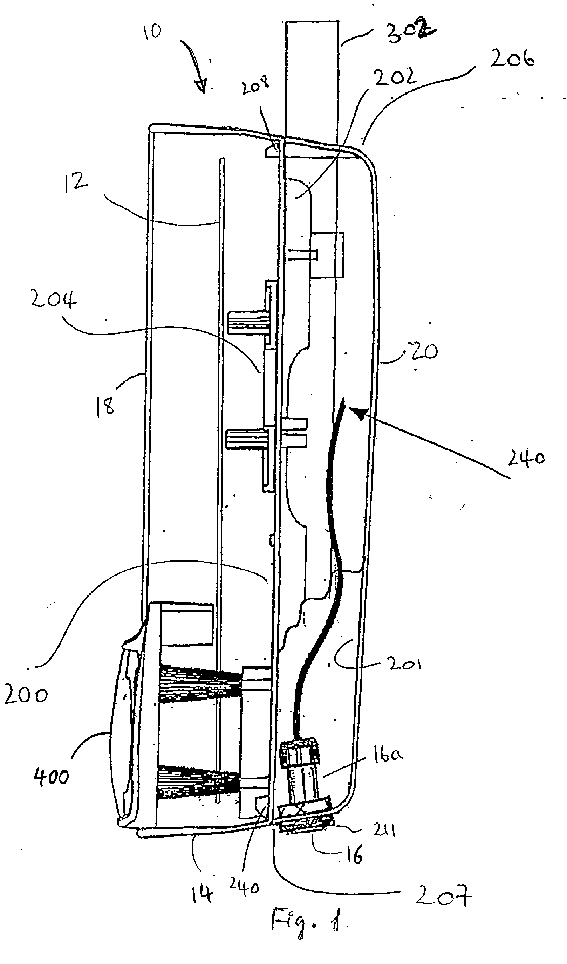

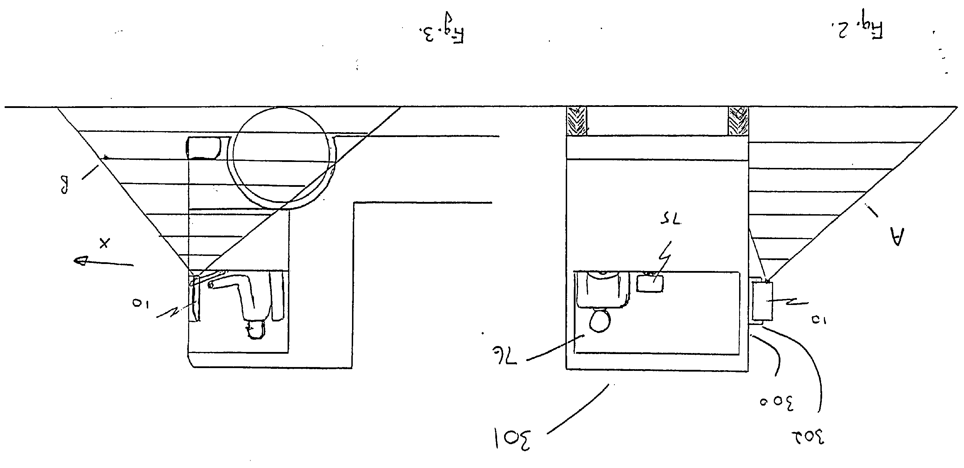

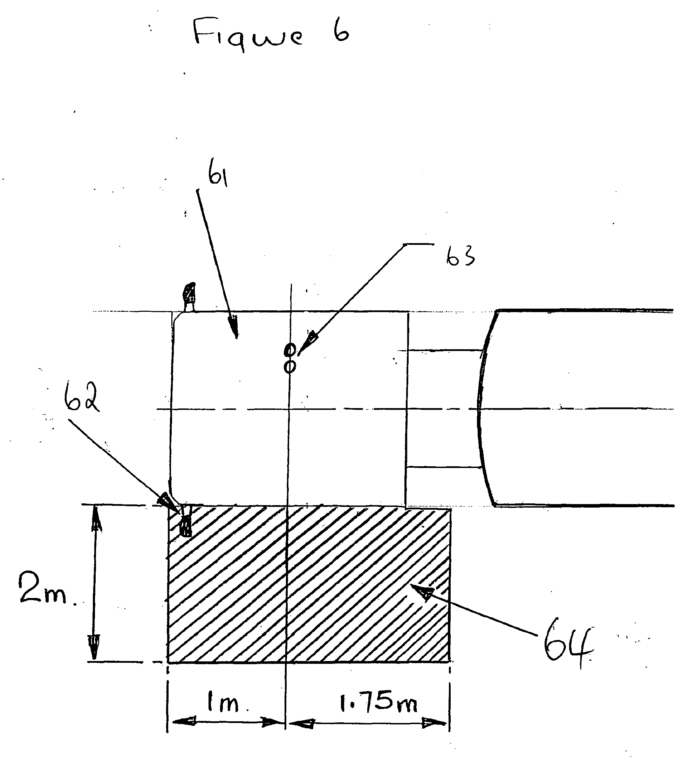

Referring to figures 1 and 5, an embodiment of the external rear view mirror assembly of the invention (10) comprises a plane mirror (12) mounted in an elongate mirror housing (14). The elongate mirror housing (14) is mounted on a passenger side surface (300) of a vehicle body (301) (see Figure 2) by a connecting arm (302). The elongate mirror housing (14) has a substantially box-like, compartmentalised configuration. Specifically the elongate mirror housing (14) has twin compartments, namely a mirror receiving compartment (18) and a cover compartment (20). A secondary mirror (400) is mounted in the lower portion of the elongate mirror housing (14).

The mirror receiving compartment (18) is open-fronted with a rear ribbed wall (200) which is furnished with a number of elongate vents and bound by first and second side walls (222), an upper wall (220) and a lower wall (221). The rear ribbed wall (200) comprises three hemicylindrical hollow ribs (202) which extend vertically in a substantially parallel fashion, part way between the upper wall (22) and lower wall (221) and which are spaced apart by flat wall portions of the rear ribbed wall (200). The three hollow ribs (201) are interrupted approximately midway along their length by a flat plate (204).

The cover compartment (20) is open-fronted with a convex rear wall (201). The open front is bound by first and second opposed side walls, a upper wall (206) and a lower wall (207). The upper wall (206) and lower wall (207) each define an obtuse angle relative to the rear wall (201) *ie* the upper wall (206) and lower wall (207) diverge outwardly. The upper wall (206) and lower wall (207) also have a shallow convex configuration. The upper wall (206) has three U-shaped cut-away portions which selectively receive the connecting arm (302). This permits the external rear view mirror assembly (10) to be vertically mounted substantially along its longitudinal axis in one of three positions relative to the vehicle to optimise the field of view.

The rear exterior edge of the rear ribbed wall (200) of the mirror receiving compartment (18) is stepped to provide an abutment surface for abutting and engaging the front edge of the cover compartment (20) with a snap-fit. The U-shaped cut-away portions in the upper wall (206) are separated by a connecting rib (208) which engages a connecting slot in the rear ribbed wall (200) to assist the engagement of the mirror receiving compartment (18) and the cover compartment (20). To further assist the engagement of the mirror receiving compartment (18) and the cover compartment (20), connecting ribs (240) near to the lower wall (207) of the cover compartment (20) engage sockets in the rear ribbed wall (200).

A conventional video camera (16) is mounted in an aperture in the lower wall (207) offset from the centre. Specifically, a main body (16a) of the video camera (16) is seated on the internal face of the lower wall (207) and extends through and beyond the aperture in the lower wall (207) where it is secured by a threaded fastener (211). Packing or grommets may be used to permit the position of the video camera (16) to be adjustable. A camera cable (mini-din connector) (240) is retained within the cover compartment (20).

The divergence of the lower wall (207) and rear wall (201) ensures that the longitudinal axis of the camera (16) is offset and divergent from the longitudinal axis of the external rear view mirror assembly (10). In other words, when the external rear view mirror assembly (10) is mounted on a vehicle, the camera (16) is at least partly facing the direction of forward travel X.

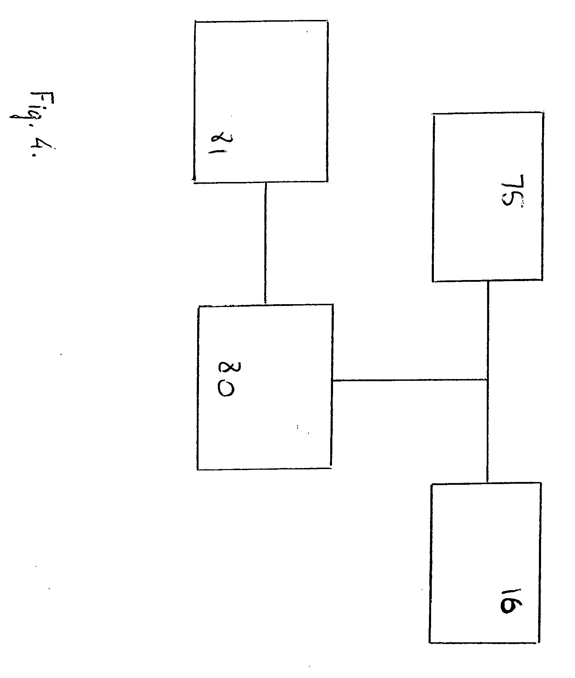

The divergence of the lower wall (207) and rear wall (201) serves to ensure that the field of vision of the camera (16) defines a region (A) to the rear and front of the longitudinal axis of the external rear view mirror assembly (10) extending over about 90° and offset to the rear as illustrated in Figure 3. The shallow convex configuration of the lower wall (207) serves to ensure that the field of vision of the video camera (16) defines a region (B) to the passenger side and driver side of the longitudinal axis of the external rear view mirror assembly (10) extending over about 60° and offset to the passenger side as illustrated in Figure 2.

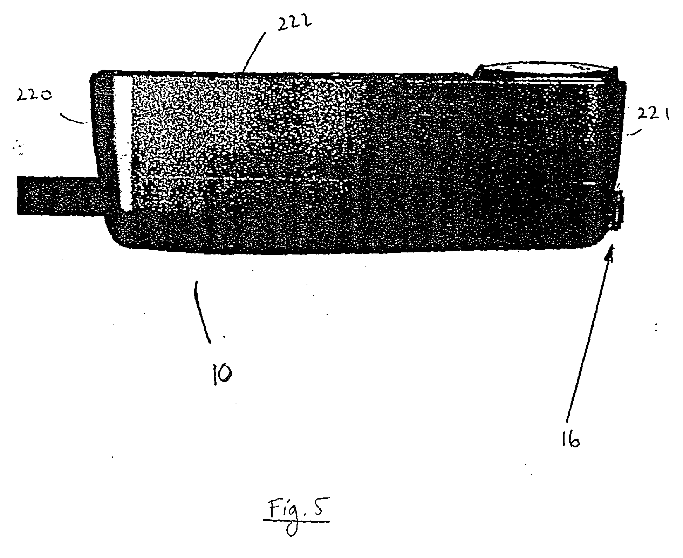

The video camera (16) is connected via the camera cable (240) to a display monitor (75) mounted on an instrument panel in the vehicle cabin (76). The video camera (16) and display monitor (75) are part of a circuit illustrated schematically in Figure 4, together with a fuse for a passenger side indicator (80) and a switch for a passenger side indicator (81). When the passenger side indicator (80) is activated, a camera image signal is sent from the video camera (16) to the display monitor (75) to enable regions A and B to be viewed.

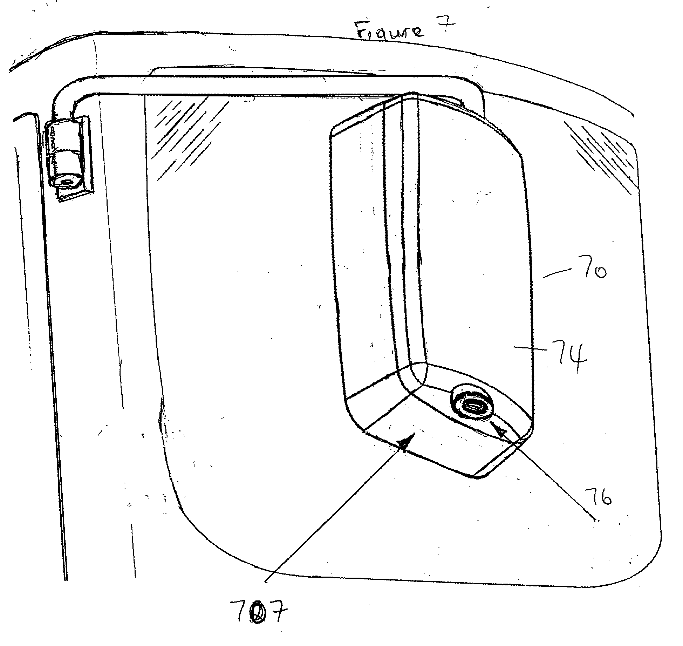

Figure 6 illustrates the external rear view mirror assembly (62) of the first embodiment mounted on the passenger side of a right hand drive vehicle (61). The ocular points of the driver (63) are provided with a rectangular field of view at ground level (64) with an area of 5.5m².

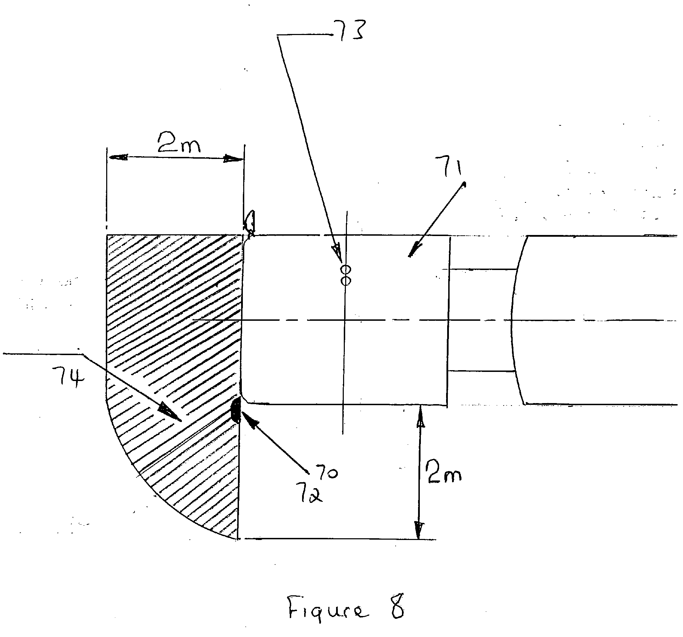

Figure 7 illustrates an external rear view mirror assembly (70) of a second embodiment of the invention mounted on the passenger side of a right hand drive vehicle (71) which provides the ocular points of the driver (73) with a field of view at ground level (74) to the front of the vehicle (see Figure 8). The elongate mirror housing (74) itself is largely the same as that of the first embodiment but the video camera (76) is mounted in an aperture in the lower wall (707) substantially centrally.

## Claims

1. An external rear view mirror assembly for a vehicle driven by a driver comprising:
an elongate mirror housing mountable from a mounting point substantially vertically along its elongate axis on a passenger side or front surface of the vehicle;
a rear view mirror mounted in the elongate mirror housing such that a passenger side or front exterior of the vehicle includes a first region visible to the driver in the mirror and a second region non-visible to the driver in the mirror; and
a video camera mounted in or near to a lower end of the elongate mirror housing in such a manner as to provide the driver with a substantially conical field of view of at least a part of the second region, wherein the field of view is asymmetrically disposed relative to the elongate axis of the elongate mirror housing.

2. An external rear view mirror assembly as claimed in claim 1 wherein the field of view is asymmetrically disposed relative to the elongate axis of the elongate mirror housing and extends to the passenger side, to the driver side, to the rear and to the front of the elongate mirror housing.

3. An external rear view mirror assembly as claimed in claim 1 or 2 wherein the field of view is asymmetrically disposed relative to the elongate axis of the elongate mirror housing and extends solely beneath the elongate mirror housing.

4. An external rear view mirror assembly as claimed in any preceding claim wherein the rear view mirror is mounted in the elongate mirror housing such that a passenger side of the vehicle includes a first region visible to the driver in the mirror and a second region non-visible to the driver, wherein the axis of the field of view is offset to the passenger side from the driver side relative to the elongate axis of the elongate mirror housing.

5. An external rear view mirror assembly as claimed in any preceding claim wherein the rear view mirror is mounted in the elongate mirror housing such that a passenger side of the vehicle includes a first region visible to the driver in the mirror and a second region non-visible to the driver, wherein the axis of the field of view is offset to the vehicle rear from the vehicle front relative to the elongate axis of the elongate mirror housing.

6. An external rear view mirror assembly as claimed in claim 1 wherein the rear view mirror is mounted in the elongate mirror housing such that a front of the vehicle includes a first region visible to the driver in the mirror and a second region non-visible to the driver, the axis of the field of view is offset to the driver side from the passenger side relative to the elongate axis of the elongate mirror housing.

7. An external rear view mirror assembly as claimed in claim 1 or 6 wherein the rear view mirror is mounted in the elongate mirror housing such that a front of the vehicle includes a first region visible to the driver in the mirror and a second region non-visible to the driver, the axis of the field of view is offset to the vehicle front from the vehicle rear relative to the elongate axis of the elongate mirror housing.

8. An external rear view mirror assembly as claimed in any preceding claim wherein the elongate mirror housing is compartmentalised.

9. An external rear view mirror assembly as claimed in any preceding claim wherein the elongate mirror housing comprises:
a mirror receiving compartment with an open front face at or near to which is mounted the mirror; and
a cover compartment mounted to the rear of the mirror receiving component.

10. An external rear view mirror assembly as claimed in claim 8 wherein the cover compartment has an open front bound by first and second opposed side walls, an upper wall and a lower wall, wherein the video camera is mounted in the lower wall.

11. An external rear view mirror assembly as claimed in claim 9 wherein the video camera is mounted in the lower wall offset from the centre.

12. An external rear view mirror assembly as claimed in claim 10 or 11 wherein the lower wall and rear wall are divergent.

13. An external rear view mirror assembly as claimed in claim 10, 11 or 12 wherein the lower wall has a convex configuration.

14. An external rear view mirror assembly as claimed in any preceding claim wherein the elongate mirror housing is selectively mountable at a plurality of mounting points on or in its lower end substantially vertically along its elongate axis on the passenger side or front surface of a vehicle.

15. An external rear view mirror assembly as claimed in any of claims 1 to 13 wherein the elongate mirror housing is selectively mountable at a plurality of mounting points on or in its lower end and on or in its upper end substantially vertically along its elongate axis on the passenger side or front surface of a vehicle.

16. An external rear view mirror assembly as claimed in any of claims 1 to 13 wherein the elongate mirror housing is selectively mountable at a plurality of mounting points on or in its upper end substantially vertically along its elongate axis on the passenger side or front surface of a vehicle.

17. An external rear view mirror assembly as claimed in claim 16 wherein the mounting points are cut-away portions in the upper end.

18. A vehicle comprising:
a vehicle body; and
an external rear view mirror assembly as defined in any preceding claim, wherein the elongate mirror housing is mounted on a passenger side or a front surface of the vehicle body in such a manner as to provide the driver with a substantially conical field of view which extends to the passenger side, to the driver side, to the vehicle rear and to the vehicle front of the elongate mirror housing.

19. A system comprising:
an external rear view mirror assembly as defined in any preceding claim;
a display monitor positioned visibly to a driver; and
a passenger side turning signal circuit operatively connected to the monitor, wherein in use the activation of the passenger side turning signal circuit causes a camera image signal from the video camera to display on the display monitor.
